# EUROPÄISCHE PATENTANMELDUNG

(11) **EP 4 776 442 A1**
(43) Veröffentlichungstag der Anmeldung: **15.07.2026**
(21) Anmeldenummer: 26151096.0
(22) Anmeldetag: 09.01.2026
(51) Int. Cl.: H01R 13/66, H01R 24/76, H01R 4/2433, H01R 24/64, H01R 13/74

(54) **BASISDOSE FÜR EINE MODULARE NETZWERKVORRICHTUNG**

(30) Priorität: 10.01.2025 DE 102025100688
(71) Anmelder: METZ CONNECT GmbH, 78176 Blumberg (DE)
(72) Erfinder: Müller, Hartmut, 78199 Bräunlingen (DE); Müller, Karl, 78166 Donaueschingen (DE); Fuoco, Fabio, 8646 Wagen (CH)
(74) Vertreter: Westphal, Mussgnug & Partner Patentanwälte mbB

(57) **Zusammenfassung**

Basisdose (10) für eine modulare Netzwerkvorrichtung (1), mit folgenden Merkmalen:
- ein erstes Gehäuse (12), das eine Vorderseite (13) und eine Rückseite (14) aufweist,
- ein zweites Gehäuse (25), wobei an oder in dem zweiten Gehäuse (25) eine Platine (35) zumindest teilweise angeordnet ist und die Platine (35) erste Kontaktelemente (36),
- ein Ladestück (40), welches zum Aufnehmen von Enden von Leitungsadern eines Anschlusskabels (110) vorgesehen ist,
- wobei die ersten Kontaktelemente (36) der Platine (35) zur Aufnahme des Ladestücks (40) eingerichtet und vorgesehen sind,
- wobei das zweite Gehäuse (25) zumindest teilweise in dem ersten Gehäuse (12) angeordnet ist,
- wobei das zweite Gehäuse (25) ein Steckgesicht (26) mit einer Steckrichtung (27) aufweist, in welches ein Gegenverbinder (105) einführbar ist,
- wobei die Steckrichtung (27) des zweiten Gehäuses (25) mindestens annähernd orthogonal zur Vorderseite (13) des ersten Gehäuses (12) ist.

## Beschreibung

Die Erfindung betrifft eine Basisdose für eine modulare Netzwerkvorrichtung gemäß den Merkmalen des Patentanspruchs 1 sowie eine modulare Netzwerkvorrichtung gemäß den Merkmalen des Patentanspruchs 12.

Basisdosen für modulare Netzwerkvorrichtungen, in die beispielsweise ein WLAN-Funktionsmodul eingesetzt wird, um eine Vielzahl von Endgeräten mit einem Netzwerk zu verbinden, sind seit langem bekannt.

Beispielsweise offenbart die deutsche Gebrauchsmusterschrift DE 2020 14 000 549 U1 eine Netzwerkzugangsvorrichtung, die einen Installationsdoseneinsatz sowie einen Netzwerkanschluss und eine Kontaktiervorrichtung umfasst, wobei die Kontaktiervorrichtung Buchsen für Klemmkontakte aufweist, die in datenkommunikativerweise mit dem Netzwerkanschluss in Verbindung treten.

Nachteilig an einer solchen Netzwerkvorrichtung ist, dass die Kontaktierung des Netzwerkanschlusses mit der Kontaktiervorrichtung über die in den Buchsen angeordneten Klemmkontakten aufwendig und fehleranfällig ist, insbesondere da die Kontaktierung erst nach dem Einbau des Installationsdoseneinsatzes erfolgt. Ferner ist an einer solchen Netzwerkvorrichtung nachteilig, dass eine Abnahmemessung ohne entsprechendes Adapterfunkmodul auf einer Baustelle mit solchen Netzwerkvorrichtungen nicht möglich ist, was im Hinblick auf die Trennung der Gewerke nachteilig sein kann.

Diese Probleme werden durch eine Basisdose für eine modulare Netzwerkvorrichtung mit den Merkmalen des Patentanspruchs 1 und eine modulare Netzwerkvorrichtung gemäß den Merkmalen des Patentanspruchs 12 gelöst.

Vorteilhafte Ausgestaltungen und Weiterbildungen sind in den abhängigen Ansprüchen angegeben.

Erfindungsgemäß ist demnach eine Basisdose für eine modulare Netzwerkvorrichtung mit einem ersten Gehäuse, das eine Vorderseite und eine Rückseite aufweist, und einem zweiten Gehäuse, wobei an oder in dem zweiten Gehäuse eine Platine zumindest teilweise angeordnet ist, wobei die Platine erste Kontaktelemente aufweist. Die Netzwerkvorrichtung umfasst ein Ladestück, welches zum Aufnehmen von Enden von Leitungsadern eines Anschlusskabels vorgesehen ist, wobei die ersten Kontaktelemente der Platine zur Aufnahme des Ladestücks eingerichtet und vorgesehen sind. Das zweite Gehäuse ist zumindest teilweise in dem ersten Gehäuse angeordnet, wobei das zweite Gehäuse ein Steckgesicht mit einer Steckrichtung aufweist, in welches ein Gegenverbinder einführbar ist, wobei die Steckrichtung des zweiten Gehäuses mindestens annähernd orthogonal zur Vorderseite des ersten Gehäuses ist.

Die Erfindung beruht auf der Idee, eine vereinfachte Kontaktierung zwischen Anschlusskabel und Basisdose dadurch zu schaffen, dass die Leitungsadern des Anschlusskabels in ein Ladestück eingelegt werden und die Leitungsadern anschließend mit den auf der Leiterplatte befindlichen ersten Kontaktelementen in elektrische Verbindung treten.

Ferner liegt der Erfindung der Gedanke zugrunde, dass die Basisdose mit handelsüblichen Netzwerktestern für die Hochfrequenzübertragung überprüft werden kann und somit eine Abnahmemöglichkeit auf der Baustelle besteht, ohne ein Adapter-Funktionsmodul verwenden zu müssen.

Vorteilhafterweise ist das Anschlusskabel mindestens annähernd parallel, vorzugsweise parallel, zu der Vorderseite der Basisdose an oder in die Basisdose geführt. Durch das Heranführen bzw. die Zuführung des Anschlusskabels parallel zur Vorderseite des ersten Gehäuses kann der Aufbau der Basisdose und damit der modularen Netzwerkvorrichtung sehr kompakt gestaltet werden. Außerdem kann es für die Montage vorteilhaft sein, das Anschlusskabel parallel zur Vorderseite des ersten Gehäuses an oder in die Basisdose zu führen. Das Anschlusskabel kann auch in einem Winkel in Bezug auf die Vorderseite der Basisdose an oder in die Basisdose geführt werden, wobei der Winkel einen Winkelbereich zwischen 0 und 45 Grad aufweist.

Bevorzugterweise ist das Steckgesicht des zweiten Gehäuses innerhalb der Vorderseite des ersten Gehäuses angeordnet oder das Steckgesicht des zweiten Gehäuses ist zurückversetzt zu der Vorderseite des ersten Gehäuses und vollständig innerhalb des ersten Gehäuses angeordnet. Dadurch kann der Gesamtaufbau der modularen Netzwerkvorrichtung, bestehend aus der Basisdose und dem Funktionsmodul, sehr kompakt gestaltet werden, da das Funktionsmodul zumindest teilweise innerhalb des ersten Gehäuses der Basisdose angeordnet ist. Bevorzugterweise ist das Funktionsmodul derart in die Basisdose einsetzbar, dass das Funktionsmodul flächig zu einer Wandfläche angeordnet ist und beispielsweise ein Möbelstück unmittelbar angrenzend an die Wandfläche positionierbar ist.

Gemäß einer besonders vorteilhaften Ausgestaltung der Erfindung weist das Steckgesicht des zweiten Gehäuses einen ersten Abstand zur Vorderseite des ersten Gehäuses auf, wobei der erste Abstand in etwa der halben Differenz eines zweiten Abstands zwischen der Vorderseite und der Rückseite des ersten Gehäuses entspricht. Durch die mittige Anordnung des Steckgesichtes des zweiten Gehäuses wird ein Kompromiss zwischen der Bautiefe der Basisdose und einem ausreichend großen Bauraum für das Funktionsmodul innerhalb des ersten Gehäuses des Grundgehäuses erreicht.

Nach einer bevorzugten Weiterbildung der Erfindung ist das Steckgesicht des zweiten Gehäuses näher zu der Rückseite des ersten Gehäuses als zu der Vorderseite des ersten Gehäuses angeordnet. Je weiter hinten das Steckgesicht des zweiten Gehäuses angeordnet ist, desto mehr Bauraum steht für das einzusetzende Funktionsmodul zur Verfügung. Beispielsweise können bei gleichen Abmessungen größere Antennen in dem Funktionsmodul verbaut sein, die eine größere Reichweite und Leistungsfähigkeit aufweisen.

Vorteilhafterweise ist an dem ersten Gehäuse rückseitig eine Verschlussklappe drehbar angeordnet, wobei die Verschlussklappe zwischen einer geöffneten und einer geschlossenen Position bewegbar ist, wobei in der geschlossenen Position die Verschlussklappe das Ladestück zumindest teilweise überdeckt. In der geöffneten Position liegen vozugsweise die ersten Kontaktelemente frei und die in dem Ladestück eingelegten Leitungsadern können mit diesen ersten Kontaktelementen elektrisch kontaktieren. Anschließend wird die Verschlussklappe aus der geöffneten Position in die geschlossene Position überführt, so dass die Verschlussklappe das Ladestück vollständig überdeckt oder zumindest teilweise überdeckt und zumindest teilweise an der Basisdose mechanisch fixiert. Aufgrund der metallischen Schirmung der Verschlussklappe sind die Leitungsadern, die besonders anfällig gegenüber elektromagnetischer Strahlung sind, geschützt. Die Verschlussklappe ist bevorzugterweise aus Stahlblech, Zinkdruckguss, Aluminium oder Edelstahl ausgebildet.

Bevorzugterweise ist das erste Gehäuse flanschartig ausgebildet ist, wobei die Vorderseite eine größere Fläche aufspannt als die Rückseite, wobei im Randbereich der Vorderseite Ausnehmungen ausgebildet sind, durch welche Befestigungsmittel, zur Montage des ersten Gehäuses an einer Wand, insbesondere für Unterputzanwendungen, durchführbar sind. Die Basisdose kann auch als Aufputzanwendung, Hohlwandanwendung, Bodenanwendungen, Deckenanwendungen oder ähnlichem eingesetzt werden. Unterputzanwendungen haben den Vorteil, dass diese platzsparend und unauffällig sind.

Nach einer besonders bevorzugten Ausgestaltung der Erfindung erstrecken sich die ersten Kontaktelemente parallel zu der Vorderseite des ersten Gehäuses. Die Steckrichtung des Ladestückes zum Verbinden der ersten Kontaktelemente mit den in das Ladestück eingelegten und festgeklemmten Leitungsadern ist ebenfalls parallel zur Vorderseite des ersten Gehäuses. Die Leitungsadern, die mit einer Orientierung in das Ladestück eingelegt und eingeklemmt sind, schneiden die Vorderseite des ersten Gehäuses entlang einer fortgedachten Linie orthogonal.

Gemäß einer vorteilhaften Weiterbildung der Erfindung sind die ersten Kontaktelemente als Schneidklemmen ausgebildet, wobei die Schneidklemmen das Ladestück über Klemmverbindungen mit den in das Ladestück eingelegten Leitungsadern zumindest teilweise mechanisch fixieren. Die Schneidklemmen weisen einen Fuß sowie zwei parallele Schenkel auf. Zwischen diesen Schenkeln ist ein Freiraum ausgebildet, in welchen die Leitungsadern im fertigmontierten Zustand eingeklemmt sind.

Bevorzugterweise sind auf der Platine zweite Kontaktelemente angeordnet. Die zweiten Kontaktelemente sind bevorzugterweise als stiftartige federnde Steckkontakte ausgebildet. Die ersten Kontaktelemente und die zweiten Kontaktelemente sind jeweils über Kontaktpads mit der Leiterplatte elektrisch und mechanisch verbunden. Die ersten Kontaktelemente und die zweiten Kontaktelemente sind jeweils über eine Leiterbahn elektrisch miteinander verbunden.

Vorteilhafterweise ist das erste Gehäuse und/oder das zweite Gehäuse aus einem leitenden Material ausgebildet. Das erste Gehäuse und/oder das zweite Gehäuse können aus einem Stahlblech, aus Aluminium, aus Zinkdruckguss oder aus Edelstahl ausgebildet sein. Der Vorteil eines Gehäuses aus elektrisch leitfähigem Material besteht darin, dass die im Gehäuse angeordneten Komponenten vor unerwünschter elektromagnetischer Strahlung geschützt sind.

Bevorzugterweise ist die Basisdose als RJ45-Basisdose ausgebildet. RJ45-Basisdosen, die auch als Ethernet-Basisdosen bezeichnet werden, verwenden die differentielle Übertragungstechnik. Die differentielle Übertragungstechnik nutzt zwei Leiterbahnen, um Signale zu übertragen. Auf einer Leiterbahn wird das ursprüngliche Signal geführt, auf der anderen das invertierte Signal. Am Empfänger wird die Differenz der beiden Signale gebildet, wodurch sich externe Störungen, die beide Leiterbahnen gleichermaßen beeinflussen, nahezu vollständig aufheben. Dies sorgt für eine hohe Störsicherheit und ermöglicht eine robuste Signalübertragung.

Erfindungsgemäß ist demnach eine modulare Netzwerkvorrichtung für ein Daten- oder Kommunikationssystem mit einer erfindungsgemäßen Basisdose sowie einem Funktionsmodul.

Bevorzugterweise weist das Funktionsmodul einen Gegenverbinder auf, der in das zweite Gehäuse der Basisdose einführbar ist. Der Gegenverbinder ist vorzugsweise als RJ45-Gegenvsteckver-binder ausgebildet. Der Gegenverbinder ist innerhalb eines Gehäuses des Funktionsmoduls, das vorzugsweise aus einem Kunststoff ausgebildet ist, angeordnet. Der Gegenverbinder des Funktionsmoduls und das zweite Gehäuse der Basisdose fixieren das Funktionsmodul zumindest teilweise innerhalb der Basisdose.

Vorteilhafterweise weist das Funktionsmodul mindestens eine Kommunikationsvorrichtung, mindestens eine Recheneinheit, mindestens eine Antenne und mindestens eine elektrische Kupplung auf.

Bevorzugterweise ist die Kommunikationsvorrichtung des Funktionsmoduls als WLAN-Modul ausgebildet. Die Kommunikationsvorrichtung kann auch als Bluetooth-Modul ausgebildet sein. Die Kommunikationsvorrichtung ermöglicht die drahtlose Verbindung mehrerer Endgeräte mit einem vorgelagerten Netzwerk, das über das Anschlusskabel mit der modularen Netzwerkvorrichtung verbunden ist.

Die Recheneinheit des Funktionsmoduls weist bevorzugterweise einen Funk-Chip und einen Mikrocontroller oder Prozessor auf, wobei der Funk-Chip und der Microcontroller auf einer Leiterplatte oder auf unterschiedlichen Leiterplatten an unterschiedlichen Stellen innerhalb des Funktionsmodul angeordnet sein können. Die Recheneinheit kann auch einen Datenspeicher aufweisen. Die Recheneinheit kann kabelgebundenen und kabellosen Endgeräten automatisch eine Netzwerkadresse, beispielsweise indem es die Netzwerkadresse über einen DHCP-Server abruft, zuweisen.

Die innerhalb des Funktionsmoduls angeordnete Antenne ist vorzugsweise als Drahtantenne, als flache Antenne, z. B. als PIFA auf einer Leiterplatte, als Spiral-Antenne oder als Dipol-Antenne ausgebildet. Innerhalb des Funktionsmoduls können auch mehrere Antennen angeordnet sein, insbesondere können auch Antennen unterschiedlicher Bauart verwendet werden. Die Antennen sind vorzugsweise im Randbereich des Funktionsmoduls angeordnet.

Bevorzugterweise ist die elektrische Kupplung an der Unterseite des Funktionsmoduls angeordnet. Die elektrische Kupplung ist besonders bevorzugt als RJ45-Buchse ausgebildet. In die RJ45-Buchse ist ein RJ45-Stecker einführbar, sodass ein kabelgebundenes Endgerät an das Netzwerk angeschlossen werden kann. Kabelgebundene Endgeräte haben dabei den Vorteil, dass diese höhere Datenraten erreichen können als drahtlos angebundene Endgeräte.

Gemäß einer besonders bevorzugten Ausgestaltung der Erfindung findet sowohl die Datenübertragung als auch die Spannungsversorgung für das Funktionsmodul über Power-Over-Ethernet (POE), nämlich der bevorzugten RJ45-Verbindung, statt. Das hat den Vorteil, dass keine zusätzliche Energieversorgung bereitgestellt werden muss, was hinsichtlich der Kosten und des Platzbedarfs vorteilhaft ist.

Gemäß einer weiteren vorteilhaften Weiterbildung der Erfindung weist das Funktionsmodul einen Lüfter auf, der zur Kühlung des Funktionsmoduls eingesetzt wird. Vorzugsweise wird ein Axiallüfter verwendet, wobei auch ein Radiallüfter verwendet werden kann. Darüber hinaus sind in das Gehäuse des Funktionsmoduls Lüftungsschlitze eingelassen. Vorteilhaft an einer verbesserten Kühlung durch den Lüfter oder die Lüftungsschlitze ist, dass höhere Leistungen bei gleichem oder kleinerem Bauraum erreicht werden können. Beispielsweise können Übertragungsraten von bis zu 40 Gbit/s erreicht werden.

Gemäß einer weiteren vorteilhaften Ausgestaltung der Erfindung ist das Funktionsmodul als Rauchmelder ausgebildet, der mit dem Netzwerk verbunden ist und im Notfall einen Alarm direkt an die zuständigen Stellen weiterleiten kann.

Vorteilhafterweise sind die Basisdose und das Funktionsmodul durch eine Rastverbindung mechanisch miteinander verbunden. Diese haben den Vorteil, dass sie ohne Werkzeug voneinander gelöst werden können. Die Basisdose und das Funktionsmodul können auch über eine Schraubverbindung oder eine Klebeverbindung oder über eine magnetische Verbindung miteinander mechanisch verbunden sein.

Nach einer besonders vorteilhaften Weiterbildung der Erfindung sind mehrere RJ45-Anschlussstellen innerhalb der Basisdose ausgebildet. Dadurch können mehrere Funktionsmodule innerhalb der Basisdose mechanisch und elektrisch verbunden werden. Beispielsweise können ein Rauchmelder und ein WLAN-Access-Point mit der Basisdose mechanisch und elektrisch verbunden sein.

Bevorzugterweise ist insbesondere im Bereich der Ausnehmungen der Vorderseite der Basisdose im fertigmontierten Zustand ein Rahmen angeordnet, der zudem an der zu montierenden Wand unmittelbar aufliegt. Der Rahmen verhindert, dass Schmutz und Flüssigkeiten in die modulare Netzwerkvorrichtung eindringen können. Zudem ist der Rahmen aus ästhetischen Gründen angebracht, sodass die Befestigungsmittel, die die modulare Netzwerkvorrichtung mir der Wand mechanisch verbinden, nicht zu sehen sind. Der Rahmen ist bevorzugterweise aus Kunststoff ausgebildet.

Es versteht sich, dass alle RJ45-Anschlüsse durch andere gängige Netzwerkanschlüsse austauschbar sind. Beispielsweise kann anstatt eines RJ45-Anschlusses ein SPE-Anschluss verwendet werden. Dies gilt sowohl für den RJ45-Stecker wie auch der RJ45-Kupplung in dem Funktionsmodul und für die RJ45-Buchse in der Basisdose. Auch ein USB-Anschluss kann anstatt der RJ45-Anschlüsse vorgesehen sein.

Nachfolgend wird unter Bezugnahme auf die begleitende Zeichnung ein Ausführungsbeispiel der vorliegenden Erfindung im Detail beschrieben. Es zeigt:
- Figur 1: eine perspektivische Ansicht einer Basisdose in Explosionsdarstellung mit Anschlusskabel,
- Figur 2A: eine Vorderansicht der Basisdose aus Fig. 1 mit angeschlossenem Anschlusskabel,
- Figur 2B: eine Seitenansicht eines in Fig. 2A angedeuteten Mittenschnitts durch die Basisdose aus der Fig. 2A mit angeschlossenem Anschlusskabel,
- Figur 2C: eine Seitenansicht der Basisdose aus Fig. 2A mit angeschlossenem Anschlusskabel,
- Figur 3: eine Draufsicht eines Funktionsmoduls,
- Figur 4A: eine Vorderansicht des Funktionsmoduls aus Fig. 3,
- Figur 4B: eine Draufsicht eines in Fig. 4A angedeuteten Schnitts durch das Funktionsmodul aus Fig. 4A,
- Figur 5: eine perspektivische Ansicht einer modulare Netzwerkvorrichtung in Explosionsdarstellung, die die Basisdose aus Fig. 1, das Funktionsmodul aus Fig. 3 sowie einen Rahmen umfasst, und
- Figur 6: eine Draufsicht der montierten modularen Netzwerkvorrichtung aus Fig. 5..

Gleiche oder funktional gleiche Teile oder Merkmale werden in der nachfolgenden detaillierten Beschreibung der Figuren mit den gleichen Bezugszeichen gekennzeichnet. Ebenso sind in den Figuren nicht alle gleichen oder funktional gleichen Teile oder Merkmale mit einer Bezugsziffer versehen.

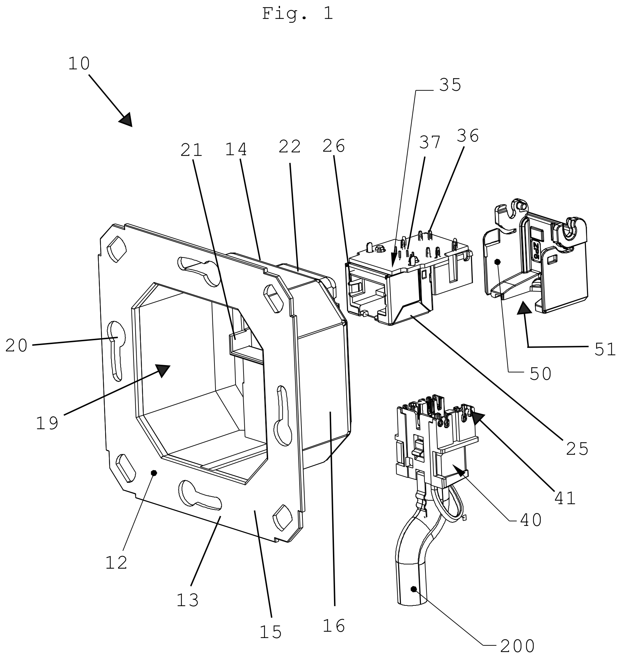

In Fig. 1 ist eine Basisdose 10 gezeigt, die ein erstes Gehäuse 12, ein zweites Gehäuse 25, eine Platine 35 mit ersten Kontaktelementen 36 und zweiten Kontaktelementen 37, eine Verschlussklappe 50 sowie ein Ladestück 40 umfasst. In das Ladestück 40 sind Leitungsadern eines Anschlusskabels 200 eingelegt.

Das erste Gehäuse 12 weist eine Vorderseite 13 und eine Rückseite 14 auf, die über Seitenflächen 16 miteinander verbunden sind, wobei das erste Gehäuse 12 einen Innenraum 19 aufweist. Das erste Gehäuse 12 ist flanschartig und topfförmig ausgebildet, wobei die Vorderseite 13 eine größere Fläche aufspannt als die Rückseite 14, wobei im Randbereich 15 der Vorderseite 13 Ausnehmungen 20 ausgebildet sind, durch welche Befestigungsmittel (nicht zu sehen), zur Montage des ersten Gehäuses 12 an einer Wand (nicht zu sehen), insbesondere für Unterputzanwendungen, durchführbar sind. Die Ausnehmungen 20 sind bevorzugterweise als Langlochbohrungen ausgebildet.

Das erste Gehäuse 12 weist im mittleren Bereich der Rückseite 14 einen Vorsprung 21 auf, der sich ausgehend von der Rückseite 14 des ersten Gehäuses 12 in Richtung der Vorderseite 13 des ersten Gehäuses 25 erstreckt. Das erste Gehäuse 12 bildet an der Rückseite 14 eine zusätzliche Kammer 22 aus, die auf der von der Vorderseite 13 des ersten Gehäuses 12 abgewandten Seite der Rückseite 14 ausgebildet ist.

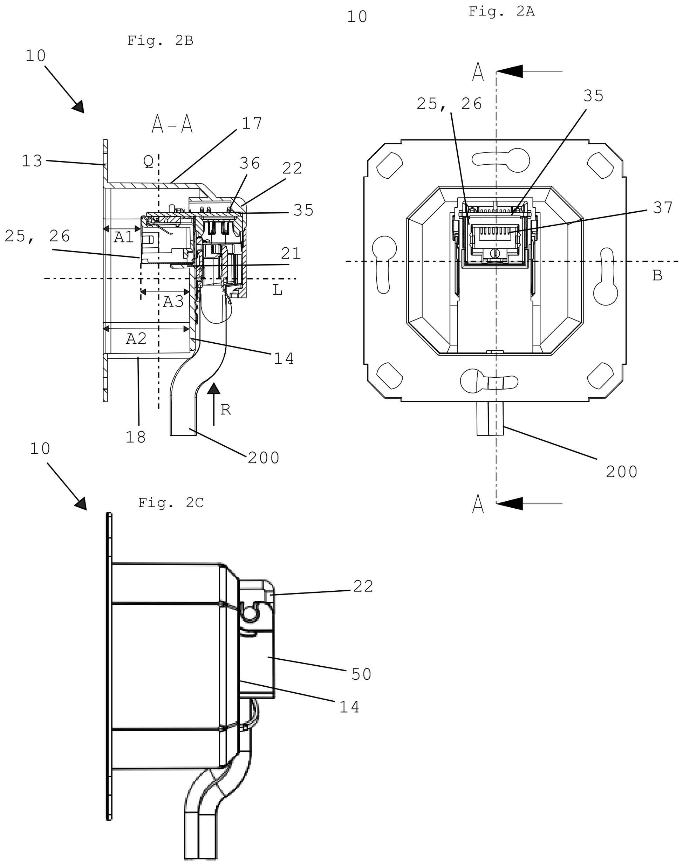

An der an der Rückseite 14 ausgebildeten Kammer 22 ist eine Verschlussklappe 50 drehbar gelagert angeordnet (vgl. Fig. 2C). Die Verschlussklappe 50 ist aus einer geöffneten Position in eine geschlossene Position überführbar. Die Verschlussklappe 50 weist eine Aussparung 51 auf, durch die im fertigmontierten Zustand das Anschlusskabel 200 geführt ist.

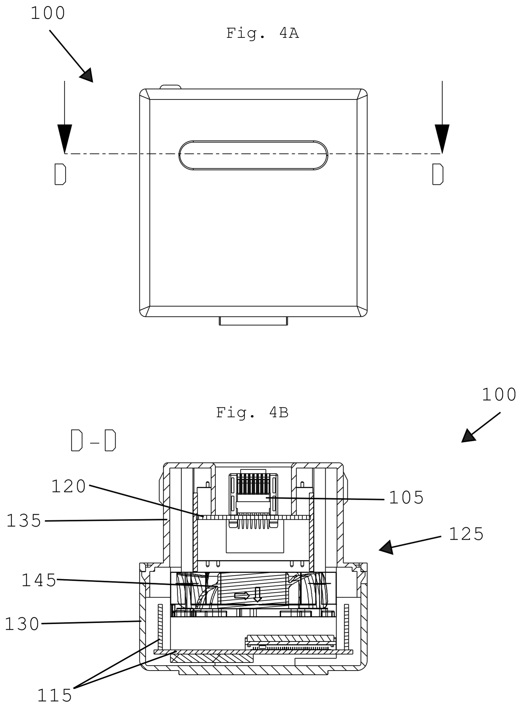

Das zweite Gehäuse 25 der Basisdose 10 weist die Form eines Gehäuses einer RJ45-Buchse auf. Das zweite Gehäuse 25 ist quaderförmig ausgebildet. Das zweite Gehäuse 25 weist ein Steckgesicht 26 mit einer Steckrichtung 27 (vgl. Fig. 2B) auf, wobei entlang der Steckrichtung 27 ein Gegenverbinder 105 (vgl. Fig. 4B) einführbar ist. Das Steckgesicht 26 weist bevorzugterweise die typische Ausgestaltung eines RJ45-Steckgesichts auf.

Das erste Gehäuse 12 und/oder die Verschlussklappe 50 und/oder das zweite Gehäuse 25 sind bevorzugterweise aus einem leitenden Material ausgebildet, um die darin angeordneten elektrischen Komponenten vor elektromagnetischer Strahlung zu schützen. Bevorzugterweise ist das erste Gehäuse 12 und/oder die Verschlussklappe 50 und/oder das zweite Gehäuse 25 aus Stahlblech, Aluminium, Zinkdruckguss oder Edelstahl ausgebildet. Das erste Gehäuse 12 und/oder die Verschlussklappe 50 und/oder das zweite Gehäuse 25 können auch aus Kunststoff ausgebildet sein.

Die Platine 35, die zumindest teilweise innerhalb der Basisdose 10 angeordnet ist, ist mit ersten Kontaktelementen 36 sowie zweiten Kontaktelementen 37 (vgl. Fig. 2B) elektrisch und mechanisch verbunden. Die ersten Kontaktelemente 36 sind bevorzugterweise als Schneidklemmen ausgebildet. Die zweiten Kontaktelemente 37 sind bevorzugterweise als federnde, stiftartige Steckkontakte ausgebildet. Die ersten Kontaktelemente 36 und die zweiten Kontaktelemente 37 sind vorzugsweise über Kontaktpads (nicht zu sehen) mit der Platine 35 elektrisch und mechanisch verbunden. Die ersten Kontaktelemente 36 und die zweiten Kontaktelemente 37 sind über eine Leiterbahn elektrisch miteinander verbunden.

Auf der Platine 35 können Kompensationseinheiten (nicht zu sehen) ausgebildet sein, die ein ungewünschtes Nebensprechen reduzieren und/oder die Einfügedämpfung sowie die Reflexionsdämpfung verbessern. Als Kompensationseinheiten können Kondensatoren oder Induktivitäten eingesetzt werden. Die Platine 35 kann eine, zwei, vier oder mehr Platinenlagen aufweisen. Mehr Platinenlagen haben den Vorteil, dass die Platine 35 kompakter ausgebildet sein kann. Nachteilig an einer höheren Anzahl an Platinenlagen sind die hohen Kosten.

Das Ladestück 40 ist quaderförmig ausgebildet und weist Ausnehmungen 41 auf, in welche im montierten Zustand die Leitungsadern des Anschlusskabels 200 eingelegt sind. Die Ausnehmungen 41 sind bevorzugterweise beschriftet, sodass die Elektrofachkraft beim Anschluss der Basisdose 10 an das Anschlusskabel 200 einen fehlerhaften Anschluss vermeiden kann. Das Ladestück 40 weist eine Steckrichtung R auf (vgl. Fig. 2B), wobei die Steckrichtung R parallel zur Vorderseite 13 des ersten Gehäuses 12 der Basisdose 10 verläuft. Die Steckrichtung R ist dabei die Richtung, in der das Ladestück 40 beim Verbinden der ersten Kontaktelemente 36 mit den Leitungsadern des Anschlusskabels 200 bewegt wird. Eine Ausnehmung 41 ist dabei so ausgebildet, dass das erste Kontaktelement 36 die eingelegte Leitungsader abisoliert und mit der Leitungsader eine elektrische Verbindung eingeht. Das Ladestück 40 ist vorzugsweise aus Kunststoff ausgebildet.

In Fig. 2A ist die montierte Basisdose 10 mit angeschlossenem Anschlusskabel 200 von vorne gezeigt.

Die zweiten Kontaktelemente 37, die auf der Platine 35 der Basisdose 10 angeordnet sind, sind im Bereich des Steckgesichts 26 des zweiten Gehäuses 25 angeordnet. Ein Gegenverbinder 105 kann in das Steckgesicht 26 des zweiten Gehäuses 25 eingeführt werden, wobei der Gegenverbinder 105 komplementäre Kontaktelemente aufweist, die eine elektrische Verbindung mit den zweiten Kontaktelementen 37 eingehen.

In Fig. 2A ist eine Seitenansicht eines Schnitts durch die Basisdose gezeigt. Das zweite Gehäuse 25 ist innerhalb der Basisdose 10 nicht exakt mittig angeordnet, sondern leicht in Richtung einer Oberseite 17 der Basisdose 10 versetzt angeordnet. Die Oberseite 17 der Basisdose 10 ist diejenige Seite, die in einer fortgedachten Linie die weitergedachte Steckrichtung R des Anschlusskabels 200 entlang der Steckrichtung R als letztes schneidet, wobei eine Unterseite 18 der Basisdose 10 diejenige Seite ist, die in einer fortgedachten Linie die Steckrichtung R des Anschlusskabels 200 als entlang der Steckrichtung R als erstes schneidet. Das zweite Gehäuse 25 kann auch exakt mittig innerhalb der Basisdose 10 oder näher in Richtung der Unterseite 18 der Basisdose 10 angeordnet sein. Es können auch zwei zweite Gehäuse 25 oder vier zweite Gehäuse 25 mit den dazugehörigen Platinen 35 und ersten und zweiten Kontaktelementen 36, 37 innerhalb der Basisdose 10 angeordnet sein.

Die Basisdose 10 weist eine Längsachse L, eine Querachse Q sowie eine Breitachse B auf (vgl. Fig. 2A, Fig. 2B). Die Längsachse L steht orthogonal zur Querachse Q und orthogonal zur Breitachse B. Die Breitachse B steht orthogonal zur Querachse Q. Die Längsachse L schneidet die Vorderseite 13 und die Rückseite 14 des ersten Gehäuses 12 orthogonal. Die Querachse Q der Basisdose 10 ist parallel zur Steckrichtung R des Anschlusskabels 200 angeordnet, wobei die Querachse Q die Oberseite 17 und die Unterseite 18 der Basisdose 10 orthogonal schneidet. Die Breitachse B erstreckt sich orthogonal zur Steckrichtung R des Anschlusskabels 200.

Das Steckgesicht 26 des zweiten Gehäuses 25 weist entlang der Längsachse L der Basisdose 10 einen ersten Abstand A1 zur Vorderseite 13 des ersten Gehäuses 12 auf. Das Steckgesicht 26 des zweiten Gehäuses 25 kann auch innerhalb der Vorderseite 13 des ersten Gehäuses 12 angeordnet sein. Der erste Abstand A1 des Steckgesichts 26 des zweiten Gehäuses 25 zur Vorderseite 13 des ersten Gehäuses 12 ist kleiner als ein dritter Abstand A3 des Steckgesichts 26 des zweiten Gehäuses 25 zur Rückseite 14 des ersten Gehäuses 12. Der erste Abstand A1 des Steckgesichts 26 des zweiten Gehäuses 25 zur Vorderseite 13 des ersten Gehäuses 12 kann auch größer sein als der dritte Abstand A3 des Steckgesichts 26 des zweiten Gehäuses 25 zur Rückseite 14 des ersten Gehäuses 12.

Das zweite Gehäuse 25 ist auf der Seite der Platine 35 angeordnet, die der Oberseite 17 des ersten Gehäuses 12 abgewandt ist. Die Platine 35 kann auch innerhalb des zweiten Gehäuses 25 angeordnet sein. Das zweite Gehäuse 25 liegt auf dem Vorsprung 21 des ersten Gehäuses 12 auf und wird dadurch innerhalb des ersten Gehäuses 12 zumindest teilweise mechanisch fixiert. Die Platine 35 ragt in Richtung der Längsachse L über die Rückseite 14 des ersten Gehäuses 12 hinaus und erstreckt sich in die Kammer 22, die an der Rückseite 14 des ersten Gehäuses 12 ausgebildet ist. Die ersten Kontaktelemente 36, die bevorzugterweise als Schneidklemmen ausgebildet sind, zeigen in Richtung der Unterseite 18 des ersten Gehäuses 12.

Die in die Ausnehmungen 41 des Ladestückes 40 eingelegten Leitungsadern werden bei geöffneter Verschlussklappe 50 von den vorzugsweise als Schneidklemmen ausgebildeten ersten Kontaktelementen 36 abisoliert und geklemmt, wobei durch die Klemmung das Ladestück 40 zumindest teilweise mechanisch mit dem ersten Gehäuse 12 fixiert wird.

Das Anschlusskabel 200 verläuft zumindest teilweise parallel zur Vorderseite 13 des ersten Gehäuses 12 der Basisdose 10. Das Anschlusskabel 200 wird dabei ausgehend von dem Bereich der Unterseite 18 des ersten Gehäuses 12 in Richtung der Oberseite 18 des ersten Gehäuses 12 geführt.

Fig. 2C zeigt eine Seitenansicht der montierten Basisdose 10. Die Verschlussklappe 50 ist in der geschlossenen Position dargestellt. Die Verschlussklappe 50 im geschlossenen Zustand, die Kammer 22 an der Rückseite 14 des ersten Gehäuses 12 sowie die Rückseite 14 des ersten Gehäuses 12 bilden eine Kavität 55, in den das Ladestück 40 im montierten Zustand eingesetzt ist, wobei das Ladestück 40 vollständig von der Verschlussklappe 50 abgedeckt und somit vor elektromagnetischer Strahlung geschützt ist.

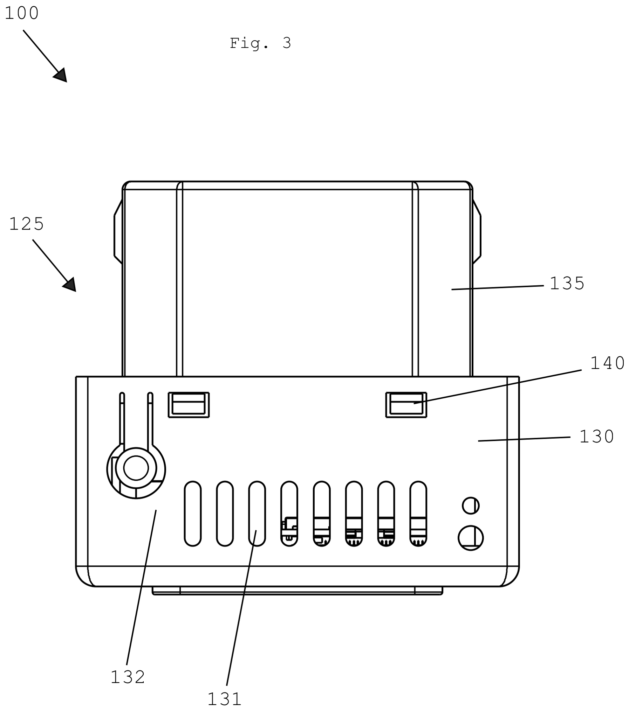

In Fig. 3 ist ein Funktionsmodul 100 aus einer Draufsicht gezeigt. Das Funktionsmodul 100 weist ein zweiteiliges Gehäuse 125 auf. Das Gehäuse 125 umfasst ein Gehäuseeinsatz 135 und ein Designgehäuse 130.

Der Gehäuseeinsatz 135 weist einen flanschförmigen Aufsatz auf und ist topfförmig ausgebildet. Das Designgehäuse 130 ist ebenfalls topfförmig ausgebildet. Der flanschförmige Aufsatz des Gehäuseeinsatzes 135 und das Designgehäuse 130 sind über eine Rastverbindung 140 miteinander mechanisch verbunden. Der Gehäuseeinsatz 135 und das Designgehäuse 140 können auch über eine Schraubverbindung oder eine Klebeverbindung mechanisch miteinander verbunden sein. Das Designgehäuse 130 ist breiter und höher ausgebildet als der Gehäuseeinsatz 135. Das Designgehäuse 130 weist Lüftungsschlitze 131 auf der Oberseite 132 auf, die zu Kühlungszwecken ausgebildet sind.

Das Gehäuse 125 ist aus einem Kunststoff ausgebildet. Das Gehäuse 125 kann auch aus Holz oder einem ähnlichen Material ausgebildet sein. Das Designgehäuse 130 und der Gehäuseeinsatz 135 können aus unterschiedlichen Materialien ausgebildet sein. Beispielsweise können der Gehäuseeinsatz 135 aus einem gut leitenden Material und das Designgehäuse 130 aus Kunststoff ausgebildet sein.

In Fig. 4A ist das Funktionsmodul 100, insbesondere das Designgehäuse 130 des Funktionsmoduls 100 von vorne gezeigt. In Fig. 4A ist ein Schnittbild durch das Funktionsmodul 100 angedeutet, wobei dieses Schnittbild in Fig. 4B abgebildet ist.

Das Funktionsmodul 100 weist innerhalb des Gehäuses 125, insbesondere innerhalb des Gehäuseeinsatzes 135 einen Gegenverbinder 105 auf, der als RJ45-Steckverbinder ausgebildet ist. Innerhalb des Gehäuses 125 sind darüber hinaus ein Lüfter 145, Antennen 115 und eine Recheneinheit 120 ausgebildet. Die Recheneinheit 120 weist einen Microcontroller sowie einen Funk-Chip auf. Die Recheneinheit 120 und der Funk-Chip können auch auf der Platine 115 angeordnet sein.

Zudem kann eine elektrische Kupplung (nicht zu sehen) innerhalb des Gehäuses 125 des Funktionsmoduls 100 angeordnet sein, wobei die elektrische Kupplung bevorzugterweise als Ethernet-Buchse ausgebildet ist. Die Ethernet-Buchse ist vorzugsweise an der Unterseite des Gehäuses 125, insbesondere des Designgehäuses 130, des Funktionsmoduls 100 angeordnet.

Bevorzugterweise ist das Funktionsmodul 100 ein WLAN-Access-Point. Das Funktionsmodul 100 kann auch ein Rauchmelder sein.

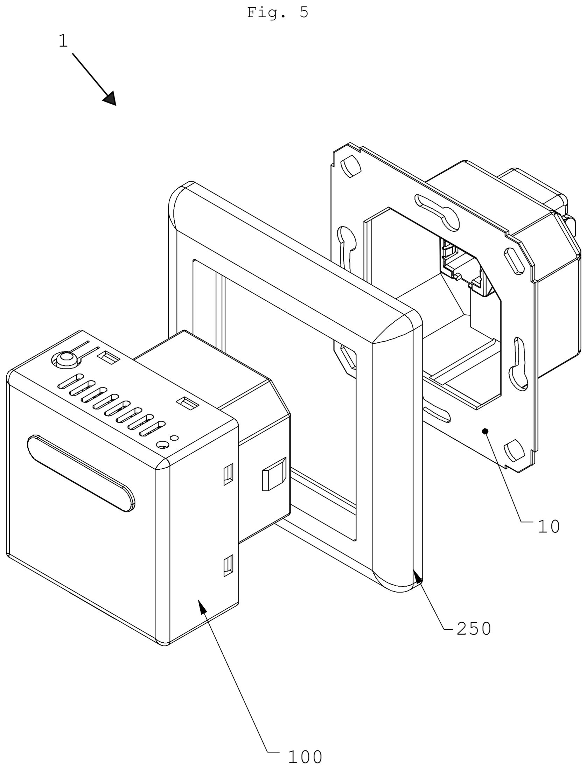

In Fig. 5 ist eine perspektivische Ansicht einer modularen Netzwerkvorrichtung 1 in Explosionsdarstellung gezeigt. Die modulare Netzwerkvorrichtung umfasst eine Basisdose 10, einen Rahmen 250 sowie ein Funktionsmodul 100.

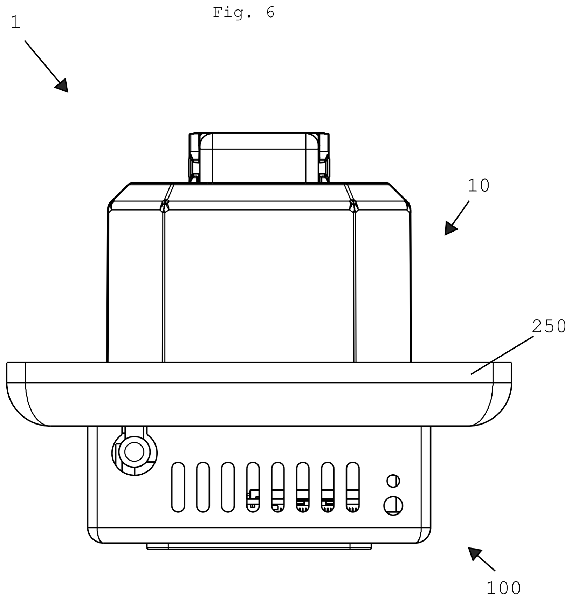

In Fig. 6 ist die modulare Netzwerkvorrichtung 1 aus einer Draufsicht gezeigt, wobei die Basisdose 10, das Funktionsmodul 100 sowie der Rahmen 250 im montierten Zustand dargestellt sind.

Der Rahmen 250 überdeckt den Randbereich 15 des ersten Gehäuses 12. Der Rahmen 250 ist dabei im montierten Zustand direkt an einer Wand (nicht zu sehen) anliegend angeordnet. Der Rahmen 250 ist bevorzugterweise aus Kunststoff ausgebildet.

### Bezugszeichenliste

- 1: Modulare Netzwerkvorrichtung

- 10: Basisdose

- 12: Erstes Gehäuse
- 13: Vorderseite
- 14: Rückseite
- 15: Randbereich
- 16: Seitenfläche
- 17: Oberseite
- 18: Unterseite
- 19: Innenraum
- 20: Ausnehmungen
- 21: Vorsprung
- 22: Kammer

- 25: Zweites Gehäuse
- 26: Steckgesicht
- 27: Steckrichtung

- 35: Platine
- 36: Erste Kontaktelemente
- 37: Zweite Kontaktelemente

- 40: Ladestück
- 41: Ausnehmungen

- 50: Verschlussklappe
- 51: Aussparung
- 52: Kavität

- 100: Funktionsmodul

- 105: Gegenverbinder

- 110: Kommunikationsvorrichtung

- 115: Antenne

- 120: Recheneinheit

- 125: Gehäuse

- 130: Designgehäuse
- 131: Lüftungsschlitze
- 132: Oberseite

- 135: Gehäuseeinsatz

- 140: Rastverbindung

- 145: Lüfter

- 200: Anschlusskabel

- 250: Rahmen

- L: Längsachse
- Q: Querachse
- B: Breitachse
- R: Steckrichtung (Anschlusskabel)
- A1: Erste Abstand (Steckgesicht bis Vorderseite)
- A2: Zweiter Abstand (Vorderseite bis Rückseite)
- A3: Dritte Abstand (Steckgesicht bis Rückseite)

## Patentansprüche

1. Basisdose (10) für eine modulare Netzwerkvorrichtung (1), mit folgenden Merkmalen:
- ein erstes Gehäuse (12), das eine Vorderseite (13) und eine Rückseite (14) aufweist,
- ein zweites Gehäuse (25), wobei an oder in dem zweiten Gehäuse (25) eine Platine (35) zumindest teilweise angeordnet ist und die Platine (35) erste Kontaktelemente (36),
- ein Ladestück (40), welches zum Aufnehmen von Enden von Leitungsadern eines Anschlusskabels (110) vorgesehen ist,
- wobei die ersten Kontaktelemente (36) der Platine (35) zur Aufnahme des Ladestücks (40) eingerichtet und vorgesehen sind,
- wobei das zweite Gehäuse (25) zumindest teilweise in dem ersten Gehäuse (12) angeordnet ist,
- wobei das zweite Gehäuse (25) ein Steckgesicht (26) mit einer Steckrichtung (27) aufweist, in welches ein Gegenverbinder (105) einführbar ist,
- wobei die Steckrichtung (27) des zweiten Gehäuses (25) mindestens annähernd orthogonal zur Vorderseite (13) des ersten Gehäuses (12) ist.

2. Basisdose (10) nach einem der vorherigen Ansprüche, **dadurch gekennzeichnet, dass** das Anschlusskabel (200) mindestens annähernd parallel, vorzugsweise parallel, zu der Vorderseite (13) der Basisdose (10) an oder in die Basisdose (10) geführt ist.

3. Basisdose (10) nach einem der vorherigen Ansprüche, **dadurch gekennzeichnet, dass** das Steckgesicht (26) des zweiten Gehäuses (25) innerhalb der Vorderseite (13) des ersten Gehäuses (12) angeordnet ist oder dass das Steckgesicht (26) des zweiten Gehäuses (25) zurückversetzt zu der Vorderseite (13) des ersten Gehäuses (12) und vollständig innerhalb des ersten Gehäuses (12) angeordnet ist.

4. Basisdose (10) nach einem der vorherigen Ansprüche, **dadurch gekennzeichnet, dass** das Steckgesicht (26) des zweiten Gehäuses (25) einen ersten Abstand (A1) zur Vorderseite (13) des ersten Gehäuses (12) aufweist, wobei der erste Abstand (A1) in etwa der halben Differenz eines zweiten Abstands (A2) zwischen der Vorderseite (13) und der Rückseite (14) des ersten Gehäuses (12) entspricht.

5. Basisdose (10) nach einem der vorherigen Ansprüche, **dadurch gekennzeichnet, dass** das Steckgesicht (26) des zweiten Gehäuses (25) näher zu der Rückseite (14) des ersten Gehäuses (12) als zu der Vorderseite (13) des ersten Gehäuses (12) angeordnet ist.

6. Basisdose (10) nach einem der vorherigen Ansprüche, **dadurch gekennzeichnet, dass** an dem ersten Gehäuse (12) rückseitig eine Verschlussklappe (50) drehbar angeordnet ist, wobei die Verschlussklappe (50) zwischen einer geöffneten und geschlossenen Position bewegbar ist, wobei in der geschlossenen Position die Verschlussklappe(50) das Ladestück (40) zumindest teilweise überdeckt.

7. Basisdose (10) nach einem der vorherigen Ansprüche, **dadurch gekennzeichnet, dass** das erste Gehäuse (12) flanschartig ausgebildet ist, wobei die Vorderseite (13) eine größere Fläche aufspannt als die Rückseite (14), wobei im Randbereich (15) der Vorderseite (13) Ausnehmungen (20) ausgebildet sind, durch welche Befestigungsmittel, zur Montage des ersten Gehäuses (12) an einer Wand, insbesondere für Unterputzanwendungen, durchführbar sind.

8. Basisdose (10) nach einem der vorherigen Ansprüche, **dadurch gekennzeichnet, dass** die ersten Kontaktelemente (36) als Schneidklemmen ausgebildet sind, wobei die Schneidklemmen das Ladestück (40) über Klemmverbindungen mit den in das Ladestück (40) eingelegten Leitungsadern zumindest teilweise mechanisch fixieren.

9. Basisdose (10) nach einem der vorherigen Ansprüche, **dadurch gekennzeichnet, dass** das erste Gehäuse (12) und/oder das zweite Gehäuse (25) aus einem leitenden Material ausgebildet ist.

10. Basisdose (10) nach einem der vorherigen Ansprüche, **dadurch gekennzeichnet, dass** die Basisdose (10) als RJ45-Basisdose ausgebildet ist.

11. Modulare Netzwerkvorrichtung (1) für ein Daten- oder Kommunikationssystem, aufweisend:
- eine Basisdose (10) gemäß einer der Ansprüche 1 bis 10,
- ein Funktionsmodul (100).

12. Modulare Netzwerkvorrichtung (1) nach Anspruch 11, **dadurch gekennzeichnet, dass** das Funktionsmodul (100) einen Gegenverbinder (105) aufweist, der in das zweite Gehäuse (25) der Basisdose (10) einführbar ist.

13. Modulare Netzwerkvorrichtung (1) nach Anspruch 11 oder 12, **dadurch gekennzeichnet, dass** das Funktionsmodul (100) mindestens eine Kommunikationsvorrichtung (110), mindestens eine Recheneinheit (120), mindestens eine Antenne (115) und mindestens eine elektrische Kupplung aufweist.
